Europäisches Patentamt

European Patent Office

Office européen des brevets

(11) Veröffentlichungsnummer: **0 063 324**
**B1**

(12) **EUROPÄISCHE PATENTSCHRIFT**

(45) Veröffentlichungstag der Patentschrift:
**29.01.86**

(51) Int. Cl.⁴: **A 23 C 3/08** // A23C11/02, A23K3/00

(21) Anmeldenummer: **82103033.5**

(22) Anmeldetag: **08.04.82**

(54) **Verfahren zur Konservierung wässriger Lösungen von Milchpulver oder Milchaustauschfutter.**

(30) Priorität: **15.04.81 DE 3115164**
**27.04.81 DE 3116582**

(43) Veröffentlichungstag der Anmeldung:
**27.10.82 Patentblatt 82/43**

(45) Bekanntmachung des Hinweises auf die Patenterteilung:
**29.01.86 Patentblatt 86/5**

(84) Benannte Vertragsstaaten:
**BE DE FR GB IT NL SE**

(56) Entgegenhaltungen:
**BE - A - 885 693**
**DE - B - 1 239 551**
**FR - A - 2 373 236**
**FR - A - 2 383 615**
**FR - A - 2 486 774**
**GB - A - 1 568 874**

(73) Patentinhaber: **HOECHST AKTIENGESELLSCHAFT,**
**Postfach 80 03 20, D-6230 Frankfurt am Main 80 (DE)**

(72) Erfinder: **Lück, Erich, Dr., Völklinger Weg 34,**
**D-6000 Frankfurt am Main 71 (DE)**
Erfinder: **Remmert, Karlheinz, Krifteler Strasse 3,**
**D-6238 Hofheim am Taunus (DE)**
Erfinder: **Semmig, Rolf, Dr., Steinweg 3,**
**D-6240 Königstein/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Milchpulver und dessen Abmischungen sowie Milchaustauschfutter mit und ohne einen Gehalt an Milchpulver sind in trockenem Zustand infolge ihres geringen Wassergehaltes nicht anfällig gegen mikrobiellen Verderb. Zum Gebrauch als Futtermittel müssen sie jedoch in Wasser aufgelöst werden, und diese Auflösungen verderben, ähnlich wie frische Milch oder Molke, relativ schnell. Dieser Verderb hat nicht nur wirtschaftliche Verluste zur Folge; die den Verderb hervorrufenden und andere Mikroorganismen belasten darüber hinaus den tierischen Organismus, z.B. indem sie Durchfälle und andere Verdauungsstörungen bewirken. Andererseits verlangt die Fütterungspraxis, dass das aufgelöste Milchpulver bzw. Milchaustauschfutter möglichst etwa 1–2 Tage haltbar bleibt.

Eine Konservierung des in Wasser aufgelösten Milchpulvers oder Milchaustauschfutters ist grundsätzlich durch Zusatz bekannter Konservierungsstoffe möglich. Ein solcher Konservierungsstoff muss physiologisch unbedenklich, für das Tier verträglich, futtermittelrechtlich zulässig, geruchs- und geschmacksneutral, preiswert und gut wirksam gegen Verderbniserreger sein. Darüber hinaus muss er auch in dem hohen pH-Bereich, den die Milchaustauschfutter in gelöster Form aufweisen, noch eine gute antimikrobielle Wirkung entfalten. Von den derzeit bekannten Konservierungsstoffen haben praktisch nur Sorbinsäure und deren Salze alle obengenannten Eigenschaften. Der nachträgliche Zusatz von Sorbinsäure oder Sorbaten zu bereits aufgelöstem Milchaustauschfutter oder Milchpulver ist jedoch ungünstig, weil er einen zusätzlichen Arbeitsgang notwendig macht.

Kaliumsorbat, das am leichtesten in Wasser lösliche Salz der Sorbinsäure kann dem Milchpulver bzw. Milchaustauschfutter vor der Auflösung in Wasser zugesetzt werden. Es hat aber den Nachteil, den pH-Wert des Futtermittels leicht zu erhöhen; dadurch wird die Wirkung etwas verschlechtert, denn sie ist, wie bei den meisten Konservierungsstoffen, um so stärker, je niedriger der pH-Wert des zu konservierenden Produktes ist. Durch Zusatz von Säuren und sauren Salzen, z.B. Fumarsäure, Citronensäure, Weinsäure und Hydrogenphosphaten, lässt sich der pH-Wert senken, allerdings verursacht ein solcher Säurezusatz weitere Kosten. Die übliche, im Handel befindliche Sorbinsäure selbst ist zu wenig wasserlöslich, zumal bei der Verwendung der Milchaustauschfutter und Milchpulver in der Landwirtschaft im allgemeinen nur einfache Rühreinrichtungen zur Verfügung stehen.

Überraschenderweise wurde nun gefunden, dass man durch Zusatz einer feinkörnigen Sorbinsäure zum trockenen Milchpulver und Milchaustauschfutter eine gute Konservierung der daraus hergestellten wässrigen Lösung erreicht. Das erfindungsgemässe Verfahren zur Konservierung wässriger Lösungen von Milchpulver oder Milchaustauschfutter ist dadurch gekennzeichnet, dass man dem trockenen Milchpulver oder Milchaustauschfutter Sorbinsäure zusetzt, die zu mindestens 80 Gew.% eine Korngrösse unter 300 μm hat, ehe man die Mischung in Wasser löst. Vorzugsweise hat die Sorbinsäure zu mindestens 90 Gew.% eine Korngrösse unter 300 μm. Die feinkörnige Sorbinsäure ist auch mit einfachen Rühreinrichtungen leicht zusammen mit dem Milchpulver und dem pulverförmigen Milchaustauschfutter in Lösung zu bringen. Infolge ihrer Korngrösse tritt in der Mischung mit dem Milchpulver oder Milchaustauschfutter keine Entmischung ein. Vorzugsweise wird die Wirkung der feinkörnigen Sorbinsäure durch Zusatz von Säuren oder sauren Salzen, wie Fumarsäure, Citronensäure, Weinsäure und Hydrogenphosphaten noch weiter verbessert.

Die Konzentration an Sorbinsäure in der wässrigen Lösung des Milchpulvers oder Milchaustauschfutters liegt vorzugsweise zwischen 0,01 und 0,2 Gew.%, insbesondere zwischen 0,05 und 0,1 Gew.%. Wenn man das pulverförmige Milchaustauschfutter oder das Milchpulver im Verhältnis 1:7 bis 1:10 in Wasser auflöst, liegt also die Konzentration der Sorbinsäure in den beiden pulverförmigen Substanzen zwischen 0,07 und 2 Gew.%. Die Vorteile der erfindungsgemässen Sorbinsäure liegen in der Preisgünstigkeit und der einfachen Anwendbarkeit.

Es ist überraschend, dass die dem Milchpulver oder Milchaustauschfutter beigemischte Sorbinsäure problemlos in Lösung geht. Nach FR-A 2 383 615 ist nämlich eine Sorbinsäure mit einem Teilchendurchmesser unter 50 μ nur schwer in Lösung zu bringen (Beispiel 16), obwohl sie erheblich feinkörniger ist als die beim vorliegenden Verfahren eingesetzte Sorbinsäure. Die Literaturstelle empfiehlt daher die Verwendung eines Sorbinsäure enthaltenden Pulvers oder Granulats von mindestens 300 μ Teilchendurchmeser, das aus Sorbinsäurepartikeln von höchstens 50 μ Durchmesser und einem leicht wasserlöslichen Feststoff, wie Zucker, hergestellt wird.

Beispiel 1

Trockenes Magermilchpulver wurde mit Sorbinsäure unterschiedlicher Korngrösse vermischt. Die Mischung wurde sodann im Verhältnis 1:10 in Wasser eingerührt. Die Lösung wurde bei Zimmertemperatur gelagert. Die infolge mikrobieller Säuerung eintretende Absenkung des pH-Wertes, die als Mass für den fortschreitenden Verderb anzusehen ist, wurde verfolgt. Die Ergebnisse finden sich in der folgenden Tabelle. Die Sorbinsäure-Prozente sind Gewichtsprozente und geben an, wieviel Gramm Sorbinsäure pro 100 Gramm wässrige Lösung des Milchpulvers eingerührt wurden.

| Eingerührte Menge | pH-Wert nach | | | | Abnahme des pH-Wertes nach | | | |
|---|---|---|---|---|---|---|---|---|
| | 0 h | 12 h | 24 h | 36 h | 0 h | 12 h | 24 h | 36 h |
| (Kontrollversuch) | 6,1 | 5,8 | 5,3 | 5,0 | – | 0,3 | 0,8 | 1,1 |
| 0,05% Sorbinsäure normaler Korngrösse* | 6,0 | 5,9 | 5,7 | 5,2 | – | 0,1 | 0,3 | 0,8 |
| 0,05% Sorbinsäure erfindungsgemässer Korngrösse** | 6,0 | 5,9 | 5,9 | 5,7 | – | 0,1 | 0,1 | 0,3 |
| 0,1% Sorbinsäure normaler Korngröse* | 5,9 | 5,8 | 5,6 | 5,5 | – | 0,1 | 0,3 | 0,4 |
| 0,1% Sorbinsäure erfindungsgemässer Korngrösse** | 5,7 | 5,7 | 5,7 | 5,6 | – | 0 | 0 | 0,1 |

\* (500–800 µm: 10%, 300–500 µm: 40%, < 300 µm: 50%)
\*\* (400–500 µm: 2%, 300–400 µm: 8%, < 300 µm: 90%)

Beispiel 2

Pulverförmiges Milchaustauschfutter folgender Zusammensetzung wurde durch Zusatz von Citronensäure so eingestellt, dass sich in wässriger Lösung (Verhältnis 1:10) ein pH-Wert von 5,4 ergab:

| | |
|---|---|
| Molkenpulver | 71,5 Gew.% |
| Trockenmagermilch | 10,0 Gew.% |
| Fettkonzentrat | 10,5 Gew.% |
| hydrolysiertes Fischmehl | 5,0 Gew.% |
| Mineral- und Wirkstoffmischung | 3,0 Gew.% |

Das trockene Milchaustauschfutter wurde sodann mit Sorbinsäure unterschiedlicher Korngrösse vermischt und im Verhältnis 1:10 in Wasser eingerührt. Die Lösung wurde bei Zimmertemperatur gelagert. Die infolge mikrobieller Säuerung eintretende Absenkung des pH-Wertes, die als Mass für den fortschreitenden Verderb anzusehen ist, wurde verfolgt. Die Ergebnisse finden sich in der folgenden Tabelle. Die Sorbinsäure-Prozente sind Gewichtsprozente und geben an, wieviel Gramm Sorbinsäure pro 100 Gramm wässrige Lösung des Milchaustauschfutters eingerührt wurden.

| Eingerührte Menge | pH-Wert nach | | | | | | Abnahme des pH-Wertes nach | | | | | |
|---|---|---|---|---|---|---|---|---|---|---|---|---|
| | 0 h | 12 h | 24 h | 36 h | 48 h | 72 h | 0 h | 12 h | 24 h | 36 h | 48 h | 72 h |
| Kontrollversuch) | 5,4 | 5,3 | 5,0 | 4,6 | 4,2 | 3,9 | – | 0,1 | 0,4 | 0,8 | 1,2 | 1,5 |
| 0,05% Sorbinsäure normaler Korngrösse* | 5,3 | 5,2 | 5,0 | 4,8 | 4,6 | 4,2 | – | 0,1 | 0,3 | 0,5 | 0,7 | 1,1 |
| 0,05% Sorbinsäure erfindungsgemässer Korngrösse** | 5,2 | 5,2 | 5,2 | 5,1 | 5,0 | 4,9 | – | 0 | 0 | 0,1 | 0,2 | 0,3 |
| 0,1% Sorbinsäure normaler Korngrösse* | 5,2 | 5,1 | 5,1 | 4,9 | 4,7 | 4,3 | – | 0,1 | 0,1 | 0,3 | 0,5 | 0,9 |
| 0,1% Sorbinsäure erfindungsgemässer Korngrösse** | 5,0 | 5,0 | 5,0 | 5,0 | 5,0 | 4,9 | – | 0 | 0 | 0 | 0 | 0,1 |

\* (500–800 µm: 10%, 300–500 µm: 40%, < 300 µm: 50%)
\*\* (400–500 µm: 2%, 300–400 µm: 8%, < 300 µm: 90%)

**Patentansprüche**

1. Verfahren zur Konservierung wässriger Lösungen von Milchpulver oder Milchaustauschfutter, dadurch gekennzeichnet, dass man dem trockenen Milchpulver oder Milchaustauschfutter Sorbinsäure zusetzt, die zu mindestens 80 Gew.% eine Korngrösse unter 300 µm hat, ehe man die Mischung in Wasser löst.

2. Verfahren nach Anspruch 1, dadurch gekennzeichnet, dass die Sorbinsäure zu mindestens 90% eine Korngrösse unter 300 µm hat.

3. Verfahren nach Anspruch 1 oder 2, dadurch gekennzeichnet, dass man dem Milchpulver oder Milchaustauschfutter soviel Sorbinsäure zusetzt, dass die anschliessend hergestellte wässrige Lösung 0,01–0,2 Gew.% Sorbinsäure enthält.

4. Verfahren nach Anspruch 1 oder 2, dadurch gekennzeichnet, dass man dem Milchpulver oder Milchaustauschfutter soviel Sorbinsäure zusetzt, dass die anschliessend hergestellte wässrige Lösung 0,05–0,1 Gew.% Sorbinsäure enthält.

5. Verfahren nach einem der Ansprüche 1 bis 4, dadurch gekennzeichnet, dass man dem trokkenen Milchpulver oder Milchaustauschfutter zusätzlich zu Sorbinsäure noch Säuren oder saure Salze zusetzt.

**Claims**

1. Process for preserving aqueous solutions of milk powder or milk extender, which comprises adding to the dry milk powder or milk extender sorbic acid, at least 80% by weight of which have a granular size below 300 μm, prior to dissolving the mixture in water.

2. Process according to claim 1, wherein at least 90% by weight of the sorbic acid have granular size below 300 μm.

3. Process according to claims 1 or 2, which comprises adding sorbic acid to the milk powder or milk extender in such a quantity that the aqueous solution prepared subsequently contains of from 0.01 to 0.2% by weight of sorbic acid.

4. Process according to claim 1 or 2, which comprises adding sorbic acid to the milk powder or milk extender in such a quantity that the aqueous solution prepared subsequently contains of from 0.05 to 0.1% by weight of sorbic acid.

5. Process according to any one of claims 1 to 4, which comprises additionally adding to the dry milk powder or milk extender acids or acid salts.

**Revendications**

1. Procécé pour conserver des solutions aqueuses de poudre de lait ou d'un aliment pour remplacer le lait, caractérisé en ce qu'on ajoute, à la poudre sèche de lait ou à l'aliment sec destiné à remplacer le lait, de l'acide sorbique dont au moins 80% en poids présentent une grosseur de grain inférieure à 300 μm, avant de dissoudre le mélange dans l'eau.

2. Procédé selon la revendication 1, caractérisé en ce que l'acide sorbique présente à 90% au moins une grosseur de grain inférieure à 300 μm.

3. Procédé selon la revendication 1, caractérisé en ce qu'on ajoute, à la poudre de lait ou à l'aliment de remplacement du lait, une quantité d'acide sorbique telle que la solution aqueuse préparée ensuite contienne 0,01 à 0,2% en poids d'acide sorbique.

4. Procédé selon la revendication 1 ou 2, caractérisé en ce qu'on ajoute, à la poudre de lait ou à l'aliment de remplacement du lait, une quantité d'acide sorbique telle que la solution aqueuse préparée ensuite contienne 0,05 à 0,1% en poids d'acide sorbique.

5. Procédé selon l'une des revendications 1 à 4, caractérisé en ce qu'en plus de l'acide sorbique, on ajoute encore des acides ou des sels acides à la poudre de lait sèche ou à l'aliment de remplacement du lait.